# EUROPÄISCHE PATENTSCHRIFT

(11) **EP 2 664 900 B1**
(45) Veröffentlichungstag und Bekanntmachung des Hinweises auf die Patenterteilung: **31.08.2016**
(21) Anmeldenummer: 12168526.7
(22) Anmeldetag: 18.05.2012
(51) Int. Cl.: G01D 11/24

(54) **Metallisches Sensorgehäuse und Verfahren zu dessen Herstellung**
Metallic sensor housing and method for its production
Boîtier de capteur métallique et son procédé de fabrication

(43) Veröffentlichungstag der Anmeldung: 20.11.2013
(73) Patentinhaber: Sick AG, 79183 Waldkirch/Breisgau (DE)
(72) Erfinder: Döbele, Christian, 79341 Kenzingen (DE)
(74) Vertreter: Manitz, Finsterwald & Partner GbR

(56) Entgegenhaltungen:
- DE-A1- 10 147 023
- DE-A1- 10 313 643
- DE-A1- 19 519 817
- DE-A1-102010 001 493
- JP-A- S 531 152
- JP-A- 2006 043 768
- US-A- 4 117 300
- US-A1- 2003 001 083
- US-A1- 2008 165 517
- US-A1- 2011 084 579

## Beschreibung

Die Erfindung betrifft ein metallisches Sensorgehäuse für einen optoelektronischen Sensor, das aus mehreren Teilen zusammengesetzt ist. Weiterhin betrifft die Erfindung einen optoelektronischen Sensor mit einem solchen Sensorgehäuse und ein Verfahren zur Herstellung eines solchen metallischen Sensorgehäuses.

Optoelektronische Sensoren umfassen oftmals hochlegierte Edelstahlumhausungen zum Schutz des Sensors, um sie gegen raue Umgebungsbedingungen zu schützen. So sind in vielen Fällen hohe chemische Beständigkeit z.B. gegen Säuren und Laugen und mechanische Robustheit notwendig. Viele optoelektronische Sensoren werden unter extremen Bedingungen eingesetzt, so dass sie z.B. thermischen Anforderungen, wie schnellen und großen Temperaturwechseln, widerstehen müssen.

Andere optoelektronische Sensoren müssen hohe Feuchtigkeitsresistenz haben und gegebenenfalls z.B. Dampfstrahlen hohen Drucks aushalten.

Wichtig ist bei einigen Anwendungen auch eine leichte Reinigungsmöglichkeit, z.B. Abwaschbarkeit.

Schließlich müssen optoelektronische Sensoren in manchen Anwendungen hohen Hygieneanforderungen genügen.

Sensorgehäuse aus rostfreiem Stahl werden heute z.B. im Feingussverfahren hergestellt. Eine Schmelze wird dabei in "verlorene Formen" gegossen. Hier besteht allerdings die Gefahr, dass die Teile durch undefiniertes Erstarren der Schmelze während des Gießens verziehen. Oftmals entstehen inhomogene Oberflächen mit Schlieren, Fließlinien und Abdrücken der Form. Um Mikrolecks im Bauteil abzudichten, ist in vielen Fällen eine zusätzliche Imprägnierung notwendig. Eine glatte Oberfläche, die hohen Hygieneanforderungen genügt, ist oftmals nur durch Schleifen oder Überfräsen erreichbar. Außerdem eignet sich das Feingussverfahren nicht zur Herstellung von großvolumigen Teilen mit geringer Wandstärke. Schließlich ist die Fertigungsgenauigkeit nicht sehr hoch.

Insbesondere bei kleinen Sensorgehäusen mit geringer Wandstärke im Verhältnis zur Längenausdehnung kommt häufig der Prozess des Pulverspritzgießens (metal-injection-molding, MIM) zum Einsatz. Hier wird ein mit einem Binder versehenes Metallpulver im Spritzguss verarbeitet und der Binder anschließend entfernt. Dann wird das Gehäuse gesintert. Damit ist es möglich, komplex geformte Teile in größeren Stückzahlen mit relativ geringen Toleranzen herzustellen. Mit der MIM-Technologie ist eine bessere Oberflächengüte als bei der Feingusstechnik auch ohne Nacharbeit zu erreichen.

Allerdings lassen sich mit der MIM-Technologie großvolumige Teile mit geringer Wandstärke nur schwer oder gar nicht herstellen. Die Technologie ermöglicht es also nicht, Teile in unterschiedlichen Größen einfach zu skalieren. Eine prozesssichere Herstellung mit kleinen Toleranzen ist aufgrund des möglichen Verzuges beim Sinterprozess schwierig.

Andere bekannte Verfahren dienen der Herstellung von gefrästen Sensorgehäusen, die optisch ansprechend gestaltet werden können. Durch die maschinelle Bearbeitung ist eine hohe Formfreiheit gegeben.

Allerdings ist beim Fräsen die Gefahr des Verzuges insbesondere von dünnwandigen Teilen höher, wenn die Teile zum Fräsen eingespannt werden. Durch den Fräsprozess entsteht außerdem ein hoher Verschnitt, so dass die Stückkosten des einzelnen Sensorgehäuses höher sind. Außerdem sind die Herstellungskosten höher, weil es insbesondere bei zähem rostfreiem Stahlmaterial zu hohem Verschleiß des Fräswerkzeugs kommt.

US 4,117,300 beschreibt eine Laserschweißnaht an einem Batteriebehälter. Zwei Flansche werden dazu aneinander gelegt und flächig miteinander verschweißt.

JP S53 1152 A beschreibt einen Laserschweißprozess, bei dem ein Element, das durch ein anderes Element hindurch gesteckt ist, durch einen Laserschweißprozess befestigt wird.

JP 2006 043 768 A beschreibt das Verschweißen zweier flächig aufeinanderliegender Bauteile.

DE 195 19 817 A1 beschreibt ein Sensorgehäuse für einen optoelektronischen Sensor aus Metall. In einem Schweißprozess wird ein Gehäusefenster befestigt. Dabei kommt ein zusätzlicher Kunststoffrahmen zum Einsatz, der angeschmolzen wird.

US 2003/0001083 A1 beschreibt ein Gehäuse für einen optischen Sensor, bei dem einzelne Teile durch Wärmeschweißen miteinander verbunden werden.

DE 101 47 023 A1 beschreibt ein Gehäuse für einen optischen oder optoelektronischen Näherungsschalter, wobei Metall zum Einsatz kommen kann.

DE 10 2010 001 493 A1 beschreibt eine Sensoranordnung, bei der unterschiedliche Gehäuseteile durch einen stoffschlüssigen Fügeprozess verbunden werden. Ein gesondert gebildeter Materialbereich der Fügepartner, der als Vorsprung oder Anlageelement vorgesehen ist, erleichtert das Schmelzen bei einem Laserschweißverfahren.

DE 103 13 643 A1 beschreibt einen metallischen Gehäusekörper, der einem Bodenkörper übergestülpt und mit diesem stoffschlüssig durch Laserschweißen verbunden wird.

Aufgabe der vorliegenden Erfindung ist es, ein metallisches Sensorgehäuse anzugeben, das den hohen Anforderungen an optoelektronische Sensoren bestmöglich genügt und trotzdem kostengünstig herstellbar ist.

Diese Aufgabe wird mit einem metallischen Sensorgehäuse für einen optoelektronischen Sensor mit den Merkmalen des Anspruchs 1 und ein Verfahren zur Herstellung eines metallischen Sensorgehäuses mit den Merkmalen des Anspruchs 4 gelöst. Anspruch 3 ist auf einen optoelektronischen Sensor mit einem erfindungsgemäßen metallischen Sensorgehäuse gerichtet.

Unteransprüche betreffen bevorzugte Ausführungsformen und Ausgestaltungen.

Ein erfindungsgemäßes metallisches Sensorgehäuse für einen optoelektronischen Sensor ist aus mehreren Teilen zusammengesetzt. Zwei oder mehr, vorzugsweise alle, metallischen Teile des Gehäuses sind stoffschlüssig miteinander verbunden. Insbesondere kann ein erfindungsgemäßes metallisches Sensorgehäuse ein Stahlgehäuse, vorzugsweise aus rostfreiem Stahl, umfassen.

Der stoffschlüssige Verbund wird bei der Erfindung durch Laserschweißen beziehungsweise durch einen Wärmeleitschweißprozess erreicht.

Die stoffschlüssige Verbindung der metallischen Teile des erfindungsgemäßen metallischen Sensorgehäuses bewirkt, dass das Sensorgehäuse "einstückig" ist bzw. wirkt. Auf diese Weise vermeidet das Gehäuse Spalte an den Kanten, so dass Flüssigkeiten gut ablaufen können und gegebenenfalls hohen Hygieneanforderungen genügt werden kann. Umfangreiches Nacharbeiten einzelner Gehäusekomponenten ist nicht notwendig und die Oberflächen erscheinen homogen.

Durch den stoffschlüssigen Verbund ist es außerdem möglich, dass das Gehäuse gut abwaschbar ist.

Wenn gemäß einer bevorzugten Ausführungsform ein Stahlgehäuse, insbesondere ein rostfreies Stahlgehäuse, zum Einsatz kommt, ist außerdem eine hohe chemische Beständigkeit gegen Säuren, Laugen oder Reinigungsmittel z.B. in der Lebensmittel verarbeitenden Industrie gewährleistet. Durch den stoffschlüssigen Verbund ist es nicht notwendig, dass Stahlteile auf andere Stahlteile gefügt oder geklebt werden müssen, so dass keine Schmutzfuge vorliegt.

Ein metallisches Sensorgehäuse, bei dem der stoffschlüssige Verbund durch Laserschweißen erreicht wird, stellt außerdem eine kostengünstige Herstellungsform dar.

Das erfindungsgemäße metallische Sensorgehäuse umfasst durch Wärmeleitschweißen stoffschlüssig miteinander verbundene Teile. So lässt sich auf besonders einfache Weise der stoffschlüssige Verbund der metallischen Gehäuseteile erreichen. Beim mit Hilfe eines Lasers durchgeführten Wärmeleitschweißprozess werden die zwei zu verbindenden Stahlbleche aneinander gebracht. Der Laserstrahl schmilzt die Kante eines Bleches nieder und treibt dessen Material auf das zweite Blech zu, so dass ein stoffschlüssiger Verbund entsteht. Die Baugruppe ist gegebenenfalls nach einem abschließenden Feinschleifprozess äußerlich nicht mehr als zusammengesetztes Konstrukt zu erkennen.

Ein wärmeleitgeschweißtes Stahlgehäuse weist hohe Robustheit und Widerstandsfähigkeit gegen thermische Anforderungen, z.B. hohe und schnelle Temperaturwechsel auf. Der Schweißprozess gewährleistet außerdem hohe Dichtigkeit, so dass auch ein Einsatz unter Wasser und in anderen Flüssigkeiten möglich ist. An den Fügestellen ist das Gehäuse durch den Schweißprozess gasdicht. Der Wärmeleitschweißprozess ist eine prozesssichere Herstellungsmöglichkeit, die eine gute Reproduzierbarkeit ermöglicht.

Erfindungsgemäße Sensorgehäuse können in unterschiedlichen Größen und Formen ausgestaltet sein. So lassen sich problemlos kubische, quaderförmige, längs ausgeprägte Gehäuse, Gehäuse mit Freiformflächen oder ähnliches gestalten. In das Gehäuse sind problemlos und gegebenenfalls ebenfalls durch stoffschlüssige Verbindung - z.B. durch Laserschweißen bzw. Wärmeleitschweißen - Befestigungsbuchsen, Anschlussstutzen oder Schalteinheiten fugenfrei integrierbar, die robust und fest ausgestaltet sind. In das Sensorgehäuse lassen sich Optoelektronikmodule, Frontscheiben, Anzeigeelemente, Bedienelemente und Anschlusstechnik leicht integrieren.

Erfindungsgemäße Sensorgehäuse gewährleisten daher insbesondere eine wirtschaftliche Herstellbarkeit und günstige Gesamtkosten.

Die Erfindung betrifft weiterhin einen optoelektronischen Sensor, der eine optoelektronische Sensoreinheit umfasst, die in einem erfindungsgemäßen metallischen Sensorgehäuse z.B. mit einem Fenster aufgenommen ist.

Insbesondere wird für den Zweck des vorliegenden Textes z.B. auch eine Lichtgitterkomponente als optoelektronischer Sensor bezeichnet, wobei das Gehäuse des Lichtgitters ein erfindungsgemäßes metallisches Sensorgehäuse umfassen kann.

Durch die Flexibilität bei der Herstellung, die Skalierbarkeit der Gehäusegrößen und -formen lässt sich das erfindungsgemäße metallische Sensorgehäuse leicht und kostengünstig so herstellen, dass es auf die entsprechenden Formen und Größen der jeweils zu verwendenden optoelektronischen Sensoreinheit leicht eingestellt werden kann.

Andere Vorteile eines erfindungsgemäßen optoelektronischen Sensors, der ein erfindungsgemäßes metallisches Sensorgehäuse umfasst, ergeben sich aus den obigen Schilderungen der Vorteile des erfindungsgemäßen metallischen Sensorgehäuses.

Bei einem erfindungsgemäßen Verfahren zur Herstellung eines metallischen Sensorgehäuses gemäß Anspruch 4 werden wenigstens zwei metallische Teile des Gehäuses durch Laserschweißen beziehungsweise durch Wärmeleitschweißen, miteinander verbunden. Dadurch wird auf einfache Weise eine stoffschlüssige Verbindung der wenigstens zwei metallischen Gehäuseteile erreicht, so dass die Vorteile erreicht werden, die oben mit Bezug zu dem erfindungsgemäßen metallischen Sensorgehäuse beschrieben sind.

Bei einer vorteilhaften Ausgestaltung des erfindungsgemäßen Verfahrens werden die einzelnen Teile im Vorhinein punktverschweißt, um sie bereits aneinander zu heften und ein Verrutschen während des Laserschweißprozesses wirksam zu verhindern.

Die Erfindung wird anhand der beiliegenden Figuren im Detail erläutert, die unterschiedliche Ausführungsformen erfindungsgemäßer Sensorgehäuse bzw. Sensoren und deren Herstellungsprozesse darstellen. Dabei zeigen
- Fig. 1: eine erfindungsgemäße Ausführungsform eines metallischen Sensorgehäuses,
- Fig. 2: den Querschnitt durch eine Naht eines Sensorgehäuses der Fig. 1,
- Fig. 3a bis 3c: verschiedene Herstellungsschritte des Gehäuses aus Fig. 1,
- Fig. 4: die Verbindungskante zweier metallischer Teile vor dem Schweißprozess im Querschnitt,
- Fig. 5: in Explosionsdarstellung den Aufbau einer Ausführungsform eines erfindungsgemäßen optoelektronischen Sensors, und
- Fig. 6: eine andere Ausführungsform eines erfindungsgemäßen metallischen Sensorgehäuses.

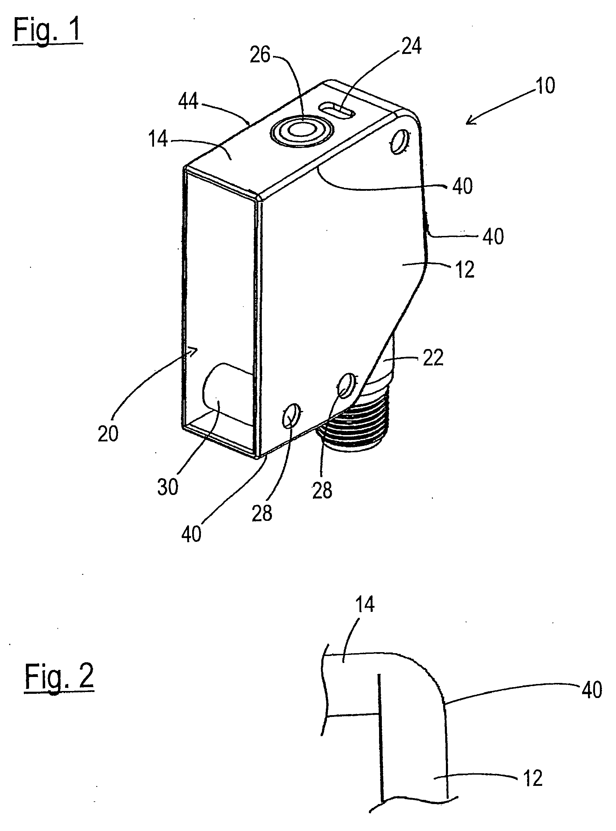

Fig. 1 zeigt eine Ausführungsform eines erfindungsgemäßen optoelektronischen Sensorgehäuses 10 aus rostfreiem Edelstahl ("INOX"). Es umfasst eine stählerne Seitenwand 12 und eine stählerne Mantelwand 14, die die Schmalseiten des Sensorgehäuses bildet. Eine weitere stählerne Wand liegt der Wand 12 gegenüber. Das Sensorgehäuse ist derart ausgeformt, dass es eine Frontöffnung 20 aufweist, die z.B. mit einer Scheibe abgeschlossen werden kann und durch die eine optische Messung durchgeführt werden kann.

An der unteren Seite des Gehäuses befindet sich ein Anschlussstutzen (beziehungsweise Anschluss-/Befestigungsstutzen) 22, der ein Schraubgewinde zur Befestigung des Sensors aufweist und zur Durchführung von Versorgungsleitungen oder Messleitungen dient.

Bezugsziffer 24 bezeichnet eine Öffnung für eine Anzeigeeinheit. Bezugsziffer 26 bezeichnet eine in das Gehäuse 10 eingesetzte Tastmembran, die die Betätigung eines darunter liegenden Schalters ermöglicht. 28 bezeichnet Öffnungen, die innerhalb des Gehäuses jeweils in einem Rohr 30 fortgesetzt sind, das die Seitenwand 12 und die gegenüberliegende Seitenwand miteinander verbindet. Diese Rohre ermöglichen eine Befestigung durch die Öffnungen 28 hindurch. Insbesondere bei Sensoren für den Hygienebereich, aber auch in anderen Fällen, können die Öffnungen 28 und Rohre 30 aber auch entfallen und gegebenenfalls eine andere Befestigungsmöglichkeit vorgesehen sein.

Die Seitenwand 12, die Mantelwand 14 und die der Seitenwand 12 gegenüberliegende Seitenwand des Sensorgehäuses 10 sind mit Hilfe eines Laserschweißprozesses miteinander verbunden worden.

Die dabei entstehende Naht 40 ist in Fig. 2 im senkrechten Querschnitt dargestellt. Die Blickrichtung entspricht also der Längsausdehnung der Naht. Die Naht 40 weist eine runde Außenkontur auf und wirkt derart, dass das Gehäuse an dieser Stelle "einstückig" aussieht.

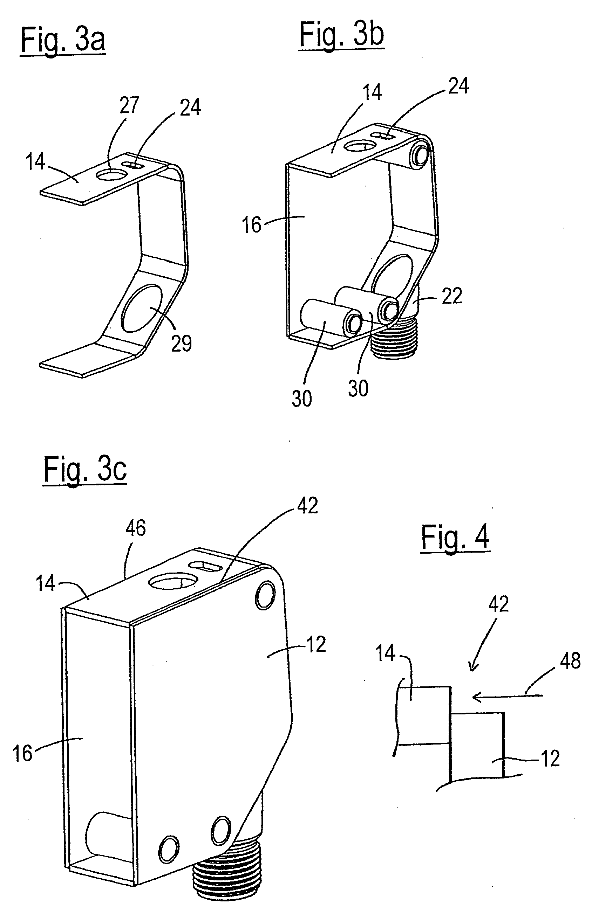

Ein solches erfindungsgemäßes Sensorgehäuse wird wie folgt hergestellt, wie es in den Fig. 3a bis 3c gezeigt ist.

Zunächst wird die Mantelwand 14 aus rostfreiem Edelstahl gestanzt und in der in Fig. 3a dargestellten Form gebogen. Dabei enthält sie bereits gestanzte oder gebohrte Löcher 24, 27 und 29. Das Loch 27 dient als Schalteröffnung, die in der endgültigen Form mit der Tastmembran 26 abgedeckt wird, um die Betätigung eines darunter liegenden Schalters zu ermöglichen. Die Öffnung 24 dient z.B. zur Aufnahme eines Anzeigeelements. Die Öffnung 29 dient zur späteren Befestigung des Anschlussstutzens 22. Die Mantelwand 14 ist also ein Biegestanzteil.

An die Mantelwand 14 wird ein Anschlussstutzen 22 und eine Seitenwand 16 befestigt, wie es in Fig. 3b gezeigt ist. Auch die Seitenwand 16 kann z.B. gestanzt oder lasergeschnitten sein. Gegebenenfalls können die Seitenwand 16 und der Anschlussstutzen 22 durch einfache Punktschweißprozesse angeheftet werden, so dass sie verrutschsicher sind. In das auf diese Weise bereits halb vorliegende Sensorgehäuse werden Rohre 30 gelegt, die später als Befestigungsbuchsen dienen können.

Wie es in Fig. 3c gezeigt ist, wird dann eine Seitenwand 12 aufgelegt und gegebenenfalls an der Kante 42 punktschweißgeheftet.

Fig. 4 zeigt die Kante 42 in diesem Zustand. Man sieht, dass die Blechteile 12 und 14 eine Kante bildend aneinander liegen. 48 bezeichnet grob die Richtung eines Laserstrahles, der dann im darauffolgenden Wärmeleitschweißprozess zur stoffschlüssigen Verfügung der Komponenten 12, 14 der Kante 42 verwendet wird. Der Laserstrahl 48 schmilzt die Kante des Blechs 12 in Richtung des Blechs 14 und treibt das Material des Blechs 12 in Richtung des Blechs 14. Es entsteht ein stoffschlüssiger Verbund aus den beiden Einzelblechen 12 und 14, welcher über einen gleichmäßigen Außenradius verfügt, wie es in Fig. 2 erkennbar ist. Es entsteht eine äußerlich nicht mehr als zusammengesetztes Konstrukt erkennbare Struktur mit einer homogenen Oberfläche. In der Regel ist es nicht mehr notwendig, einen Nachschleifprozess durchzuführen. Es können jedoch z.B. durch ein abschließendes Ätzen oder Glasperlen-/ bzw. Sandstrahlen optimale Oberflächen hinsichtlich Design- und/oder Hygieneanforderungen erreicht werden.

Insbesondere die Naht 42 zwischen der Mantelwand 14 und der Seitenwand 12, die Naht 46 zwischen der Mantelwand 14 und der Seitenwand 16 und die Naht zwischen dem Anschlussstutzen 22 und der Mantelwand 14 können vorteilhaft auf diese Weise erzeugt werden.

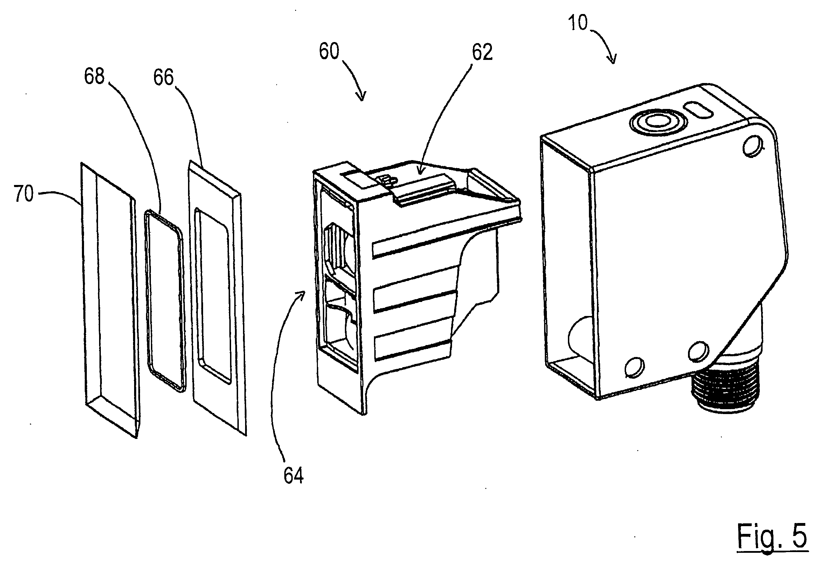

Fig. 5 zeigt, wie in das so fertig gestellte Sensorgehäuse 10 das optoelektronische Sensorelement 60 eingesetzt wird. Es kann sich dabei z.B. um eine Einheit handeln, die in einer Lichtschranke zum Einsatz kommt. Dazu weist es in an sich bekannter Weise Sender- und Empfängerelemente 64 auf, die hier nur durch die vordere Öffnung angedeutet sind. Elektrische Anschlüsse 62 und/oder Schaltereinheiten, die z.B. durch die Tastmembran 26 geschaltet werden können, befinden sich im hinteren Teil des optoelektronischen Sensorelements 60. Nachdem das optoelektronische Sensorelement 60 in das erfindungsgemäße Sensorgehäuse 10 eingeschoben ist, kann es mit einem Abdeckrahmen 66 abgeschlossen werden. Schließlich wird das Sensorgehäuse mit einer Frontscheibe 70 versehen, wozu optional ein Zwischenrahmen 68 als Klebstoffkragen bzw. Klebstoffbarriere für die Frontscheibenklebung vorgesehen sein kann.

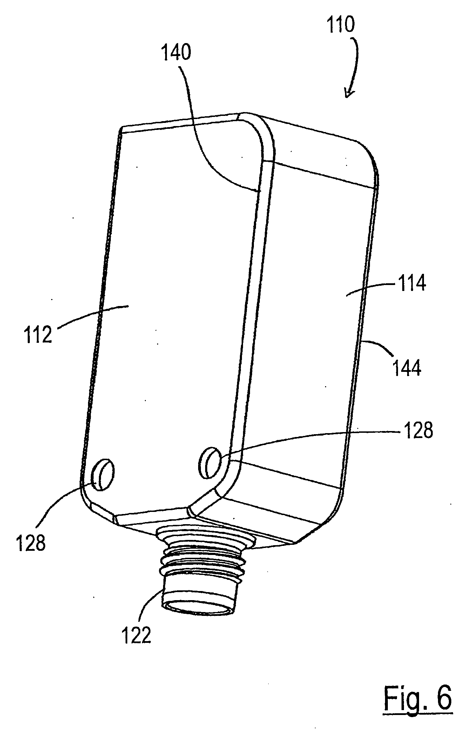

In Fig. 6 ist eine andere Ausführungsform 110 mit einer anderen Form gezeigt. Die Mantelwand 114 ist hier über einen Wärmeleitschweißprozess mit der Seitenwand 112 stoffschlüssig verbunden. Ebenso ist an der Kante 144 die der Seitenwand gegenüberliegende Seitenwand mit der Mantelwand 114 stoffschlüssig verbunden. Das Gehäuse 110 weist einen Anschlussstutzen (beziehungsweise Anschluss-/Befestigungsstutzen) 122 im unteren Bereich auf. 128 bezeichnet wiederum Löcher für Befestigungsdurchführungen ähnlich den Befestigungsdurchführungen 28 der Ausführungsform der Fig. 1.

Die Erfindung ermöglicht auf einfache Weise die Herstellung von Edelstahlgehäusen mit hoher Oberflächengüte und hygienischem und ansprechendem Design auf prozesssichere und wirtschaftliche Weise. Es ist auf einfache Weise möglich, ein skalierbares System nach Art eines Baukastens zu realisieren.

Da gewalztes Blech als Ausgangsmaterial eingesetzt wird, ist eine extrem hohe Oberflächengüte erreichbar. Durch den stoffschlüssigen Verbund der Bleche unter Verwendung des Laserwärmeleitschweißverfahrens entsteht ein positives Erscheinungsbild, das die Einzelkomponenten nahezu nicht mehr als solche erkennen lässt.

### Bezugszeichenliste

- 10, 110: Metallgehäuse
- 12, 112: Seitenwand
- 14, 114: Mantelwand
- 16: Seitenwand
- 20: vordere Öffnung
- 22, 122: Anschlussstutzen
- 24: Öffnung für Anzeigeelement
- 26: Tastmembran
- 27: Schalteröffnung
- 28, 29, 128: Loch
- 30: Rohr
- 40, 140: wärmeleitgeschweißte Kante
- 42: Schweißkante vor dem Wärmeleitschweißen
- 44, 144: wärmeleitgeschweißte Kante
- 46: Schweißkante vor dem Wärmeleitschweißen
- 48: Laserstrahl
- 60: optoelektronische Sensoreinheit
- 62: elektrischer Anschluss
- 64: Sender und Empfänger
- 66: Abdeckrahmen
- 68: Zwischenrahmen / Klebstoffkragen bzw.-barriere
- 70: Frontscheibe

## Patentansprüche

1. Metallisches Sensorgehäuse (10, 110) für einen optoelektronischen Sensor, das aus mehreren Teilen (12, 14, 16, 22, 112, 114, 122) zusammengesetzt ist, wobei als Teile zwei Seitenwände (12, 16, 112) und eine als Biegestanzteil ausgestaltete Mantelwand (14, 114) vorhanden sind, die als gewalzte Stahlbleche ausgestaltet sind, wobei wenigstens eine Seitenwand (12, 112) mit der als Biegestanzteil ausgestalteten Mantelwand (14, 114) eine Kante mit einem Winkel von 90° bildend stoffschlüssig miteinander verbunden sind, wobei die stoffschlüssig miteinander verbundenen Teile durch einen als Wärmeleitschweißprozess ausgestalteten Laserschweißprozess miteinander verbunden sind, der umfasst, dass das mit Hilfe eines Laserstrahles geschmolzene Material einer Kante eines (12) der Teile des Gehäuses mit Hilfe des Laserstrahles in Richtung eines zweiten Teiles (14) des Gehäuses getrieben wird.

2. Metallisches Sensorgehäuse (10, 110) für einen optoelektronischen Sensor nach Anspruch 1, **dadurch gekennzeichnet, dass** es aus rostfreiem Stahl ist.

3. Optoelektronischer Sensor mit einer optoelektronischen Sensoreinheit (60), die in einem metallischen Sensorgehäuse (10, 110) nach einem der Ansprüche 1 oder 2 aufgenommen ist.

4. Verfahren zur Herstellung eines metallischen Sensorgehäuses (10, 110) gemäß einem der Ansprüche 1 oder 2, bei dem wenigstens eine Seitenwand (12, 112) mit der als Biegestanzteil ausgestalteten Mantelwand durch einen als Wärmeleitschweißprozess ausgestalteten Laserschweißprozess einen Winkel von 90° bildend stoffschlüssig miteinander verbunden werden, der umfasst, dass das mit Hilfe eines Laserstrahles geschmolzene Material einer Kante eines (12) der Teile des Gehäuses mit Hilfe des Laserstrahles in Richtung des zweiten Teiles (14) des Gehäuses getrieben wird.

5. Verfahren nach Anspruch 4, bei dem die zu verschweißenden Teile in einem Vorschritt miteinander punktverschweißt werden, der dem Laserschweißschritt vorgeschaltet ist.

## Claims

1. A metallic sensor housing (10, 110) for an optoelectronic sensor which is composed of a plurality of parts (12, 14, 16, 22, 112, 114, 122), wherein two side walls (12, 16, 112) and a jacket wall (14, 114) designed as a bent stamped part are present as parts and are designed as rolled steel sheets; wherein at least one side wall (12, 112) is connected with material continuity to the jacket wall (14, 114) designed as a bent stamped part while forming an edge at an angle of 90°; wherein the parts connected to one another with material continuity are connected to one another by a laser welding process which is designed as a heat-conductive welding process and which comprises the material of an edge of one (12) of the parts of the housing melted with the aid of a laser beam being driven with the aid of the laser beam in the direction of a second part (14) of the housing.

2. A metallic sensor housing (10, 110) for an optoelectronic sensor in accordance with claim 1, **characterized in that** it is composed of stainless steel.

3. An optoelectronic sensor having an optoelectronic sensor unit (60) which is received in a metallic sensor housing (10, 110) in accordance with one of the claims 1 or 2.

4. A method of manufacturing a metallic sensor housing (10, 110) in accordance with one of the claims 1 to 2, in which at least one side wall (12, 112) is connected with material continuity to the jacket wall designed as a bent stamped part by a laser welding process designed as a heat-conductive welding process while forming an angle of 90°, said laser welding process comprising the material of an edge of one (12) of the parts of the housing melted with the aid of a laser beam being driven with the aid of the laser beam in the direction of the second part (14) of the housing

5. A method in accordance with claim 4, wherein the parts to be welded are spot-welded to one another in a previous step which precedes the laser welding step.

## Revendications

1. Boîtier de capteur métallique (10, 110) pour un capteur optoélectronique, qui est composé de plusieurs parties (12, 14, 16, 22, 112, 114, 122), dans lequel les parties sont deux parois latérales (12, 16, 112) et une paroi enveloppe (14, 114) réalisée sous forme de pièce poinçonnée cintrée, qui sont réalisées sous forme de tôles d'acier laminées, au moins une paroi latérale (12, 112) étant reliée par coopération de matières avec la paroi enveloppe (14, 114) réalisée sous forme de pièce poinçonnée cintrée en formant une arête d'un angle de 90°, et les parties reliées l'une à l'autre par coopération de matières sont reliées l'une à l'autre par un processus de soudage au laser réalisé par un processus de soudage à conduction thermique qui inclut que le matériau fondu à l'aide d'un faisceau laser d'une arête de l'une (12) des parties du boîtier est chassé en direction d'une seconde partie (14) du boîtier à l'aide du faisceau laser.

2. Boîtier de capteur métallique (10, 110) pour un capteur optoélectronique selon la revendication 1, **caractérisé en ce qu'**il est constitué en acier inoxydable.

3. Capteur optoélectronique comportant un ensemble capteur optoélectronique (60) qui est logé dans un boîtier de capteur métallique (10, 110) selon l'une des revendications 1 ou 2.

4. Procédé de réalisation d'un boîtier de capteur métallique (10, 110) selon l'une des revendications 1 ou 2, dans lequel au moins une paroi latérale (12, 112) est reliée par coopération de matières avec la paroi enveloppe réalisée sous forme de pièce poinçonnée cintrée par un processus de soudage au laser réalisé par un processus de soudage à conduction thermique en formant un angle de 90°, qui inclut que le matériau fondu à l'aide d'un faisceau laser d'une arête de l'une (12) des parties du boîtier est chassé en direction d'une seconde partie (14) du boîtier à l'aide du faisceau laser.

5. Procédé selon la revendication 4, dans lequel les parties à souder l'une sur l'autre sont soudées ponctuellement dans une étape préliminaire qui est prévue avant l'étape de soudage au laser.
